# EUROPÄISCHE PATENTANMELDUNG

(11) **EP 1 234 509 A1**
(43) Veröffentlichungstag der Anmeldung: **28.08.2002**
(21) Anmeldenummer: 02002428.7
(22) Anmeldetag: 01.02.2002
(51) Int. Cl.: A23L 1/314, A23L 1/317

(54) **Verfahren zur Herstellung einer fettarmen Wurstware**

(30) Priorität: 05.02.2001 AT 1822001
(71) Anmelder: Kraft, Erich Josef, 6710 Nenzing (AT)
(72) Erfinder: Kraft, Erich Josef, 6710 Nenzing (AT)
(74) Vertreter: Hefel, Herbert, Dipl.-Ing.

(57) **Zusammenfassung**

Bei einem Verfahren zur Herstellung einer fettarmen Wurstware wird ein zerkleinertes Fleischmaterial mit einem Milchprodukt vermischt. Das zerkleinerte Fleischmaterial wird zunächst mit Eis vermischt und im weiteren erfolgt eine Vermischung mit einem Süßrahm, dessen Fettgehalt mindestens 12 %, vorzugsweise mindestens 15 %, und weniger als 25 %, vorzugsweise weniger als 20 % beträgt, wobei der Gewichtsanteil des Süßrahms an der Gesamtmenge der Bestandteile der Wurstware im Bereich zwischen 5 % und 20 %, vorzugsweise im Bereich zwischen 7 % und 15 %, nochmals vorzugsweise bei 10 % liegt und wobei der Gewichtsanteil an Eis an der Gesamtmenge der Bestandteile der Wurstware im Bereich zwischen 15% und 45%, vorzugsweise im Bereich zwischen 20% und 40%, nochmals vorzugsweise bei etwa 30% liegt.

## Beschreibung

Die Erfindung betrifft ein Verfahren zur Herstellung einer fettarmen Wurstware, wobei ein zerkleinertes Fleischmaterial mit einem Milchprodukt vermischt wird, sowie eine Wurstware, welche ein Fleischmaterial und ein Milchprodukt enthält.

Wurstwaren wie Leberkäse, Frankfurter und Extrawurst werden üblicherweise hergestellt, indem ein entsprechendes Fleisch zerkleinert wird, beispielsweise zunächst in einem Fleischwolf und anschließend in einem Kutter oder von Anfang an in einem Kutter, und anschließend Eis zugegeben wird. Nach einer weiteren Vermischung und Zerkleinerung erfolgt eine Zugabe einer Fettmasse (Speck). In der weiteren Folge wird gegebenenfalls nochmals eine Menge an Eis zugegeben und die Mischung weiter gekuttert, bis die gewünschte Konsistenz erreicht ist. Der Fettgehalt der so erzeugten Wurstware liegt üblicherweise im Bereich zwischen 25 bis 30% oder höher. Durch Verwendung besonderer Fleischqualitäten kann der Fettgehalt bis auf ca. 15% gesenkt werden. Es ist weiters bereits bekannt, statt der Fettmasse ein Pflanzenfett zu verwenden. Die auf diese Weise hergestellte Wurstware besitzt einen Fettanteil von etwa 15%.

Aus der FR-PS 2.156.854 ist weiters ein fettarmes Fleischprodukt bekannt, das hergestellt wird, indem zerkleinertes Fleisch im Kutter mit gefrorener Milch, insbesondere Magermilch oder magerer Sauermilch, vermischt wird. Dieses Produkt besitzt zwar einen geringen Fettgehalt, unterscheidet sich aber in Konsistenz sowie geschmacklich von herkömmlichen Wurstwaren.

Aus der EP 0 478 526 A1 ist weiters ein Fleischprodukt bekannt, welches mit einem Milchprodukt vermischtes und in der weiteren Folge fermentiertes bzw. vergärtes Fleisch aufweist. Als Milchprodukt wird Topfen bzw. Quark oder ein Frischkäse verwendet.

Bei einer weiteren bekannten fettarmen Wurstware wird anstelle der Fettmasse Milcheiweiß zugegeben. Es wird ein sehr fettarmes Produkt erhalten (Fettgehalt unter 2%), das vom Konsumenten aufgrund seiner Konsistenz und seines Geschmacks jedoch nur in geringem Maße angenommen wurde.

Die JP 61289843 A beschreibt weiters ein Lebensmittel in Form eines Kuchens oder einer Eiscreme, welches eine Mischung aus Fischfleisch mit frischer Sahne umfaßt. Die Mischung aus Fischfleisch und Sahne wird gedämpft und anschließend abkühlen gelassen oder gefroren. Es handelt sich hierbei nicht um eine Wurstware sondern um ein völlig anderes Lebensmittelprodukt mit anderen Eigenschaften und einem anderen Geschmack.

Die JP 59232072 A beschreibt ein Nahrungsmittel, das Fischfleisch, Stärke, Milchprodukte wie Milch oder Käse und Gemüse enthält. Es handelt sich hier ebenfalls nicht um eine Wurstware und durch die Verwendung von Stärke im Zusammenhang mit Fischfleisch ergibt sich ein Produkt mit ganz anderer Charakteristik.

In der DE 200 13 974 U1 ist eine Brühwurst beschrieben, die eine Mischung aus einer Fleischemulsion und einem fermentierten Molkereiprodukt enthält. Als Molkereiprodukt ist beispielsweise saure Rahmmilch angeführt. Die Verwendung von Sauerrahm führt zu einer Wurstware mit einer völlig unbefriedigenden Geschmacksqualität.

Aufgabe der Erfindung ist es ein Verfahren zur Herstellung einer fettarmen Wurstware bereitzustellen, durch welches eine Wurstware mit einer hervorragenden geschmacklichen Qualität und vorteilhaften Konsistenz geschaffen wird. Erfindungsgemäß gelingt dies bei einem Verfahren der eingangs genannten Art dadurch, daß das zerkleinerte Fleischmaterial zunächst mit Eis vermischt wird und daß im weiteren eine Vermischung mit einem Süßrahm erfolgt, dessen Fettgehalt mindestens 12 %, vorzugsweise mindestens 15 %, und weniger als 25 %, vorzugsweise weniger als 20 % beträgt, wobei der Gewichtsanteil des Süßrahms an der Gesamtmenge der Bestandteile der Wurstware im Bereich zwischen 5 % und 20 %, vorzugsweise im Bereich zwischen 7 % und 15 %, nochmals vorzugsweise bei 10 % liegt und wobei der Gewichtsanteil an Eis an der Gesamtmenge der Bestandteile der Wurstware im Bereich zwischen 15% und 45%, vorzugsweise im Bereich zwischen 20% und 40%, nochmals vorzugsweise bei etwa 30% liegt.

Überraschenderweise hat es sich gezeigt, daß dagegen unter Verwendung eines ungesäuerten Rahms, das heißt eines Süßrahms, mit einem Fettgehalt im angegebenen Bereich sowie von Gewichtsanteilen an Süßrahm und an Eis in den angegebenen Bereichen eine Wurstware mit einer hervorragenden Geschmacksqualität und Konsistenz erzeugt werden kann, die einen wesentlich geringeren Gesamtfettgehalt als marktübliche Wurstwaren aufweist. Der Fettanteil kann beispielsweise im Bereich zwischen 3 und 6% liegen.

Alle Angaben von Fettanteilen sind als Gewichtsprozentangaben zu verstehen.

Als Fleischmaterial kann bevorzugterweise Schweinefleisch, Rindfleisch oder eine Mischung hiervon verwendet werden. Je nach der herzustellenden Wurstware unterscheidet sich das verwendete Fleischmaterial.

Der Gewichtsanteil des Fleischmaterials an der Gesamtmasse liegt günstigerweise im Bereich zwischen 40% und 75%. Ein Bereich zwischen 50% und 70% ist hierbei bevorzugt, wobei ein besonders bevorzugter Wert im Bereich von etwa 60% liegt. Der Gewichtsanteil an Eis liegt günstigerweise im Bereich zwischen 15% und 45%, vorzugsweise im Bereich zwischen 20% und 40%. Ein Wert von etwa 30% ist besonders bevorzugt. Der Gewichtsanteil an Rahm liegt günstigerweise zwischen 5% und 20%, vorzugsweise zwischen 7% und 15%. Besonders bevorzugt ist ein Wert von etwa 10%. Um ein fettarmes Produkt herzustellen liegt der Fettgehalt des Rahms vorteilhafterweise bei weniger als 25%, wobei ein Wert von weniger als 20% bevorzugt ist. Als Rahm wird vorteilhafterweise ein Süßrahm verwendet.

Weitere Vorteile und Einzelheiten werden in der Folge anhand eines bevorzugten Ausführungsbeispiels beschrieben.

In diesem Ausführungsbeispiel werden zur Herstellung eines fettarmen Leberkäses bzw. Knackers folgende Zutaten verwendet: 3 kg Rindfleisch, 3 kg Schweinefleisch, 3 kg Eis und 1 kg Rahm mit 15% Fettgehalt, weiters als Hilfsmittel Phosphat und Pökelsalz und Gewürze nach Geschmack. Als Rindfleisch und Schweinefleisch kann solches verwendet werden, das als Klasse II bekannt ist und angeboten wird. Das Rindfleisch und das Schweinefleisch wird ausgeschnitten, um eventuelles Fett bzw. Flachsen zu entfernen. Es wird weiters im Wolf zerkleinert und in den Kutter eingefüllt. Statt dessen könnte es auch direkt im Kutter zerkleinert werden. Zwei Drittel der Menge des Eises wird zum Fleisch im Kutter gegeben ebenso wie das Phosphat und das Pökelsalz und die Mischung gekuttert bis sie eine Temperatur von etwa 10° erreicht hat. Als nächstes wird der Rahm hinzugegeben und kurz durchgemischt. Es folgen die Gewürze und das restliche Eis. Die Mischung wird bis zu einer Endtemperatur von ca. 12° Celsius gekuttert.

Um die Masse zu Leberkäse fertig zu verarbeiten, wird diese in Formen abgefüllt und wie herkömmlich gebacken. Zur Fertigverarbeitung als Knacker wird die Masse wie üblich in Därme abgefüllt, heiß geräuchert, bei 75° gebrüht und kalt geduscht oder im Becken gekühlt.

Das Endprodukt weist einen Brennwert von etwa 450 bis 500 Kilojoule je 100 g auf sowie einen Fettgehalt im Bereich zwischen 3% und 7%.

Zur Herstellung einer fettarmen Extrawurst und von fettarmen Frankfurtern wird anstelle von Rindfleisch der Klasse II solches der Klasse I verwendet. Es können ansonsten die gleichen Ausgangsprodukte in den selben Verhältnissen verwendet werden.

Auf die gleiche Weise kann auch eine Bratwurst hergestellt werden. Wiederum wird ein Fleischmaterial (Rindfleisch und Schweinefleisch) mit Eis und Rahm verarbeitet. Die Gewichtsverhältnisse der Bestandteile können dabei gleich bleiben. Es wird hier aber kein Pökelsalz sonder Kochsalz verwendet. Hilfsmittel sind wiederum Phosphat und Gewürze. Die in Wursthäute abgefüllte Masse wird nur gebrüht, nicht geräuchert.

Das beschriebene Ausführungsbeispiel kann in verschiedener Weise abgeändert werden, ohne den Bereich der Erfindung zu verlassen. Beispielsweise kann die erste Zugabe von Eis etwa im Bereich von 40% bis 75% der Gesamtmenge des Eises variieren. Die Temperaturen, bis zu denen gekuttert wird, können ebenfalls variiert werden, beispielsweise kann die Temperatur der Masse vor der Zugabe des Rahms im Bereich zwischen 7° Celsius und 12° Celsius variiert werden, die Temperatur, bei der die Masse aus dem Kutter entnommen wird, im Bereich zwischen 10° und 15° variiert werden.

Es können weitere Hilfsstoffe und Zusatzstoffe (wie beispielsweise Champignons, Paprika usw.) zugegeben werden, sowie andere Fleischsorten (z. B. Kalb oder Geflügel) bzw. -mischungen verwendet werden.

## Patentansprüche

1. Verfahren zur Herstellung einer fettarmen Wurstware, wobei ein zerkleinertes Fleischmaterial mit einem Milchprodukt vermischt wird, **dadurch gekennzeichnet, daß** das zerkleinerte Fleischmaterial zunächst mit Eis vermischt wird und daß im weiteren eine Vermischung mit einem Süßrahm erfolgt, dessen Fettgehalt mindestens 12 %, vorzugsweise mindestens 15 %, und weniger als 25 %, vorzugsweise weniger als 20 % beträgt, wobei der Gewichtsanteil des Süßrahms an der Gesamtmenge der Bestandteile der Wurstware im Bereich zwischen 5 % und 20 %, vorzugsweise im Bereich zwischen 7 % und 15 %, nochmals vorzugsweise bei 10 % liegt und wobei der Gewichtsanteil an Eis an der Gesamtmenge der Bestandteile der Wurstware im Bereich zwischen 15% und 45%, vorzugsweise im Bereich zwischen 20% und 40%, nochmals vorzugsweise bei etwa 30% liegt.

2. Verfahren nach Anspruch 1 **dadurch gekennzeichnet, daß** nach der Zugabe von Süßrahm im weiteren eine weitere Zugabe von Eis und Vermischung mit diesem erfolgt.

3. Verfahren nach Anspruch 1 oder Anspruch 2 **dadurch gekennzeichnet, daß** gleichzeitig mit der Vermischung mit Eis und/oder Süßrahm eine Zerkleinerung der Bestandteile der Masse erfolgt.

4. Verfahren nach einem der Ansprüche 1 bis 3 **dadurch gekennzeichnet, daß** die Vermischung im Kutter erfolgt.

5. Verfahren nach einem der Ansprüche 1 bis 4 **dadurch gekennzeichnet, daß** der Gewichtsanteil des Fleischmaterials an der Gesamtmenge der Bestandteile der Wurstware im Bereich zwischen 40% und 75%, vorzugsweise im Bereich zwischen 50% und 70%, nochmals vorzugsweise bei etwa 60% liegt.

6. Verfahren nach einem der Ansprüche 1 bis 6 **dadurch gekennzeichnet, daß** vor der Zugabe des Süßrahms Hilfsstoffe, wie Phosphat und/oder Pökelsalz zugegeben werden.

7. Verfahren nach einem der Ansprüche 4 bis 6 **dadurch gekennzeichnet, daß** die Mischung aus Fleischmaterial und Eis auf eine Temperatur im Bereich zwischen 7° und 12° Celsius gekuttert wird, bevor Süßrahm zugegeben wird.

8. Verfahren nach einem der Ansprüche 4 bis 7 **dadurch gekennzeichnet, daß** nach der weiteren Zugabe von Eis die Mischung auf eine Temperatur im Bereich zwischen 10° und 15° gekuttert wird, bevor sie aus dem Kutter entnommen wird.

9. Verfahren nach einem der Ansprüche 2 bis 8 **dadurch gekennzeichnet, daß** bei der ersten Zugabe von Eis etwa 40% bis 75%, vorzugsweise etwa zwei Drittel, der Gesamtmenge des Eises zugegeben wird.

10. Verfahren nach einem der Ansprüche 1 bis 9 **dadurch gekennzeichnet, daß** Gewürze zugegeben werden, vorzugsweise nach der Zugabe des Süßrahms.

11. Verfahren nach einem der Ansprüche 1 bis 10 **dadurch gekennzeichnet, daß** das Fleisch-material Schweinefleisch oder Rindfleisch oder eine Mischung hiervon ist.

12. Wurstware, insbesondere hergestellt nach dem Verfahren nach einem der Ansprüche 1 bis 11, welche ein Fleischmaterial und ein Milchprodukt enthält, **dadurch gekennzeichnet, daß** das Milchprodukt ein Süßrahm ist, dessen Fettgehalt mindestens 12 %, vorzugsweise mindestens 15 %, und weniger als 25 %, vorzugsweise weniger als 20 % beträgt, wobei der Gewichtsanteil des Süßrahms an der Gesamtmenge der Bestandteile der Wurstware im Bereich zwischen 5 % und 20 %, vorzugsweise im Bereich zwischen 7 % und 15 %, nochmals vorzugsweise bei 10 % liegt und wobei der Gewichtsanteil an Eis an der Gesamtmenge der Bestandteile der Wurstware im Bereich zwischen 15 % und 45 %, vorzugsweise im Bereich zwischen 20 % und 40 %, nochmals vorzugsweise bei etwa 30 % liegt.

13. Wurstware nach Anspruch 12, **dadurch gekennzeichnet, daß** der Fettgehalt der Wurstware im Bereich zwischen 3% und 7% liegt.
